# EUROPÄISCHE PATENTSCHRIFT

(11) **EP 1 481 100 B1**
(45) Veröffentlichungstag und Bekanntmachung des Hinweises auf die Patenterteilung: **10.08.2005**
(21) Anmeldenummer: 03704665.3
(22) Anmeldetag: 20.02.2003
(51) Int. Cl.: C21C 5/00, C21C 5/52, C21C 7/068

(54) **VERFAHREN ZUM ERZEUGEN VON NICHT ROSTENDEM STAHL, INSBESONDERE VON CHROM- ODER CHROMNICKELHALTIGEM EDELSTAHL**
METHOD FOR THE PRODUCTION OF STAINLESS STEEL, PARTICULARLY HIGH-GRADE STEEL CONTAINING CHROME OR CHROME NICKEL
PROCEDE DE PRODUCTION D'ACIERS INOXYDABLES, EN PARTICULIER D'ACIERS SPECIAUX AU CHROME OU AU CHROME-NICKEL

(30) Priorität: 05.03.2002 DE 10209472
(43) Veröffentlichungstag der Anmeldung: 01.12.2004
(73) Patentinhaber: SMS Demag Aktiengesellschaft, 40237 Düsseldorf (DE)
(72) Erfinder: PLESCHIUTSCHNIGG, Fritz-Peter, 47269 Duisburg (DE); MEIERLING, Peter, 40474 Düsseldorf (DE); SCHNEIDER, Karl-Josef, 46514 Schermbeck (DE); PETRY, Jochen, 47226 Duisburg (DE)
(74) Vertreter: Valentin, Ekkehard
(86) Internationale Anmeldenummer: PCT/EP2003/001724
(87) Internationale Veröffentlichungsnummer: WO 2003/074741

(56) Entgegenhaltungen:
- EP-A- 0 331 751
- EP-A- 0 721 990
- DE-A- 19 621 143
- US-A- 3 575 696

## Beschreibung

Die Erfindung betrifft ein Verfahren zum Erzeugen von nichtrostendem Stahl, insbesondere von chrom- oder chromnickelhaltigem Edelstahl, in einer ein oder zwei oder mehr Gefäße umfassenden Schmelzeinrichtung, die jeweils entweder im Elektrolichtbogen- oder im Sauerstoffaufblas-Verfahren betrieben werden,
mit den Schritten
(a) Chargieren von eisenhaltigem Flüssig- und / oder Festeinsatz und Legierungsträgem
(b) Erschmelzen des Einsatzes über Lichtbogen,
(c) Frischen der Schmelze durch Sauerstoffblasen,
(d) Reduzieren der chromoxidhaltigen Schlacke,
wobei der abgestochene flüssige Stahl unmittelbar einer Weiterverarbeitung zugeführt wird. Eine solche Weiterverarbeitung besteht aus einer VOD-Anlage (Vacuum-Oxygen-Decarburization) und einer nachfolgenden Stranggießanlage, der die Schmelze über Gießpfannen zugeführt wird.

Ein solches Verfahren ist z.B. aus der DE 196 21 143 A1 bekannt, bei dem zeitgleich neben dem entkohlenden Verblasen der Charge im ersten Gefäß der Schmelzprozess einer zweiten Charge in dem zweiten Gefäß durchgeführt wird. Dieses Verfahren verringert die Prozessschritte gegenüber früher angewendeten Verfahren und reduziert den Energieverbrauch bei den einzelnen Prozessschritten, z.B. wird ein häufigeres Umfüllen eingespart. Außerdem sind die Betriebsaggregate in geringer Bauhöhe ausgestaltet. Das Verfahren bildet außerdem die Grundlage für die Versorgung einer kontinuierlich arbeitenden Stranggießmaschine, da jeweils nach der Fertigstellung einer Schmelze in einem der Gefäße wieder eine neue Charge für das Stranggießen zur Verfügung steht, so dass die Stranggießanlage ohne Unterbrechung betrieben werden kann.

Ein noch ungelöstes Problem beim Erzeugen von nichtrostendem Stahl, insbesondere von chrom- oder chromnickelhaltigem Edelstahl, stellt bei der Entkohlung bis zu Endkohlenstoffgehalten unter 0,1 % der dabei eintretende Chromverlust dar, der sich durch den Übergang einer übergroßen Menge von Chrom in die Schlacke äußert. Die dadurch mit Chrom angereicherte Schlacke ist äußerst schwierig zu behandeln und muss durch Reduktion mit Ferrosilizium oder Sekundär-Aluminium wieder zurückgewonnen werden.

Der Erfindung liegt die Aufgabe zugrunde, eine Zeiteinteilung zu schaffen, in der ein Zeitabschnitt für das Chromreduzieren passend eingeplant werden kann.

Die gestellte Aufgabe wird erfindungsgemäß durch das Verfahren gemäß Anspruch 1 gelöst.

Die Einstellung der Reaktionsintensität kann dadurch vorgenommen werden, dass neben dem O₂-Blasen mit einer Toplanze und / oder einer Seitenlanze ausschließlich Inertgase und / oder Stickstoff durch Bodenspülsteine eingeblasen werden.

Die Zeiteinteilung wird nach anderen Vorteilen bei der Anwendung von zwei Gefäßen dahingehend vorgenommen, dass zeitversetzt in dem zweiten Gefäß während der Frischphase einer ersten Schmelze im ersten Gefäß die zweite Schmelze im zweiten Gefäß mit dem Chargieren von Flüssig- und / oder Festeinsatz begonnen und das Einschmelzen im zweiten Gefäß zusammen mit dem Beenden des Frischens durch Sauerstoffblasen im ersten Gefäß abgeschlossen wird. Dadurch entsteht für das jeweils andere Gefäß ein Zeitraum, in dem die gerade freie Behandlungseinrichtung eingesetzt werden kann (Elektroden oder Sauerstoffblaslanze). Der Prozess im anderen Gefäß wird dabei nicht gestört. Gleichzeitig ist dadurch eine Basis für weitere Maßnahmen geschaffen, um den Prozess bezüglich des Übergangs von Chrom in die Schlacke zu beeinflussen.

Nach der weiteren Erfindung besteht eine solche (erste) Maßnahme darin, dass nach dem Frischen durch Sauerstoffblasen der ersten Schmelze im ersten Gefäß oder der zweiten Schmelze im zweiten Gefäß, jeweils eine Reduktion der chromhaltigen Schlacke durch Zuführen von Reduktionsmitteln sowie von Energie über den Elektrolichtbogen vorgenommen wird. Die Elektroden des Elektrolichtbogen-Ofens stellen eine Hilfe für die Verflüssigung der Schlacke dar und verhindern ein Abkühlen der Schlacke in einem Bereich, in dem die Schlacke krümmelig wird und zum Erstarren neigt. Eine erstarrte Schlacke könnte nur noch schwerlich wieder prozessfähig gemacht werden. Die durch die Elektroden zugeführte Energie bringt die Schlacke zum sofortigen Reagieren, so dass diese mit den ebenfalls Energie abgebenden Reduktionsmitteln viel leichter reduziert werden kann und damit der Restanteil des in der Schlacke befindlichen Chroms gering bleibt. Hierbei entsteht der zusätzliche Vorteil, dass die Überhitzungstemperatur von Anfang an niedriger eingestellt werden kann.

Dieser Effekt kann nach alternativen Verfahrensmerkmalen (als zweite Maßnahme) auch dadurch in geringfügig vermindertem Umfang erzielt werden, indem nach dem Frischen durch Sauerstoffblasen der ersten Schmelze im ersten Gefäß oder der zweiten Schmelze im zweiten Gefäß jeweils eine Reduktion der chromhaltigen Schlacke durch Zuführen von Reduktionsmitteln sowie durch starkes Bodenspülen mit inertem Spülgas durchgeführt wird. Hierbei wird vorausgesetzt, dass die Reduktionsmittel genügend exotherme Energie für den Reduktionsvorgang abgeben. Für diesen Sonderfall kann auch ohne die Energie der Elektroden ausgekommen werden.

Während des Lichtbogen-Einschmelzens des flüssigen und / oder festen Einsatzes ist weiter vorteilhaft, dass ein sanftes Bodenspülen mit Stickstoff und /oder mit inertem Spülgas über Bodenspülsteine durchgeführt wird. Dadurch wird die Schmelze vergleichmäßigt und die angestrebten Reaktionen werden unterstützt.

Weiter ist vorgesehen, dass für das sanfte oder starke Bodenspülen über Bodenspülsteine als inertes Spülgas Stickstoff, Argon oder Inertgasmischungen angewendet werden.

Es kann nach dem Einschmelzen auch zweckmäßig sein, dass während des Frischens durch Sauerstoffblasen mit einer Toplanze und / oder einer Seitenlanze gleichzeitig ein starkes Bodenspülen mit Spülgas über die Bodenspülsteine durchgeführt wird. Dadurch findet ein verstärktes Mischen der entstehenden Schmelze statt.

Zur Regelung der Temperatur, z.B. der Überhitzung, ist es weiter vorteilhaft, dass während des Einschmelzens über Elektrolichtbogen feste Kühlstoffe und /oder Schlackenbildner kontinuierlich chargiert werden.

Dabei ist es zweckmäßig, dass als feste Kühlstoffe Schrott, Eisenschwamm, Masseln, Legierungsträger und als Schlackenbildner Kalk zugeführt werden.

Für den Lichtbogen-Einschmelzvorgang kann ein angestrebtes Verhältnis zwischen flüssigem und festem Einsatz noch dadurch kontrolliert werden, indem Roheisen über eine Rinne und / oder den geöffneten Ofendeckel in das jeweilige Ofengefäß chargiert wird.

Der Wechsel von Elektroden und Sauerstofflanzen kann femer dazu benutzt werden, dass während des Abstechens des flüssigen Stahls die Elektroden des Elektrolichtbogen-Ofens in eine Parkstellung gefahren werden.

Die Erfindung ist anhand der Zeichnung dargestellt und wird nachfolgend näher beschrieben.

Es zeigen:
- Fig. 1: die beiden zusammenwirkenden Gefäße mit gemeinsamer Schwenk- und Hub-Einrichtung für die Elektroden und die Blaslanze bzw. die Seitenlanze,
- Fig. 2: ein Zeit-Diagramm zum Ablauf des Verfahrens in jedem einzelnen Gefäß und in ihrer Kombination zueinander und
- Fig. 3: eine alternative Gestaltung der Reduktion von Chrom aus der Schlacke.

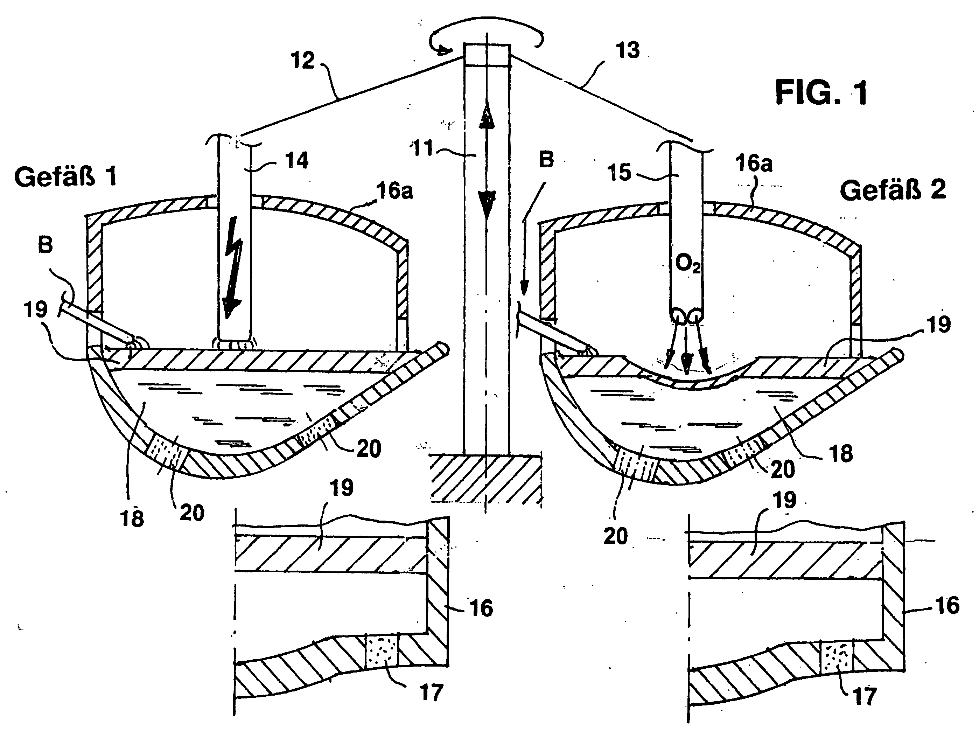

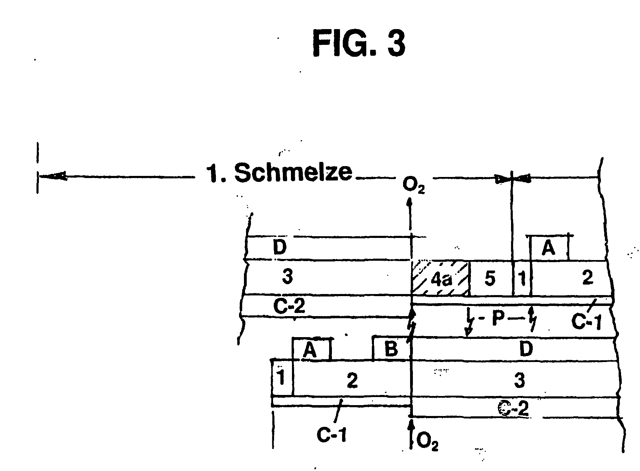

Gemäß Fig. 1 befinden sich das Gefäß 1 und das Gefäß 2, als Elektrolichtbogenofen oder als Konverter ausgestaltet, in einem Abstand, in dem eine Hub- und Schwenkeinrichtung 11 angeordnet ist, die über Arme 12 und 13 Elektroden 14 und eine Blaslanze 15 in die Gefäße 1 und 2 absenken, hochfahren und schwenken kann. Dabei werden die Blaslanze 15 und die Elektroden 14 in den jeweiligen Betriebsabstand gebracht, wie gezeichnet. Das Gefäß 1 und das Gefäß 2 kann jeweils auch als Erkerofen 16 mit einem außermittigen Abstich 17 ausgeführt sein. In den Gefäßen 1, 2 oder 16 befindet sich die dem Verfahren zugrundeliegende Schmelze 18 mit einer Schlackenschicht 19.

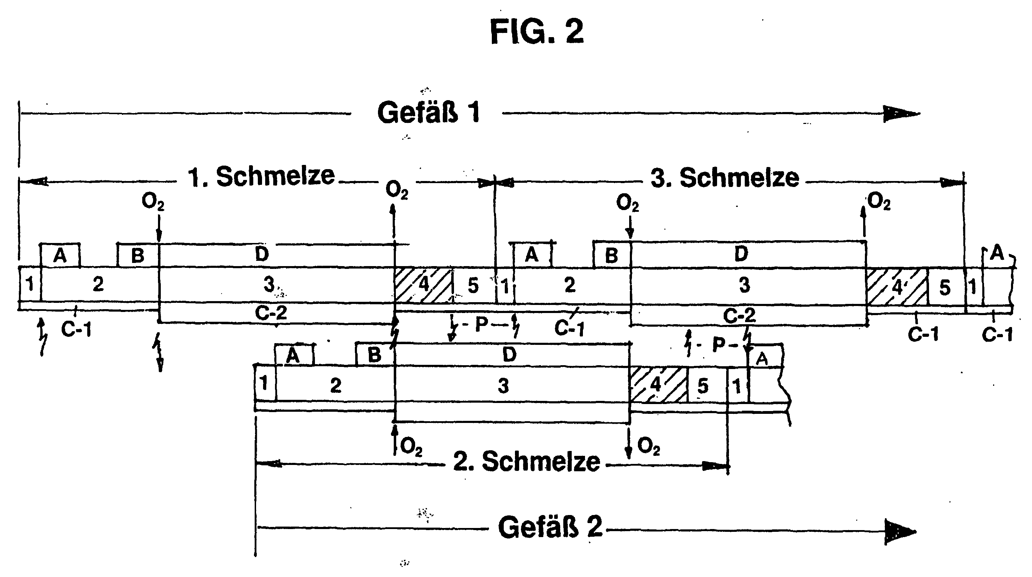

Gemäß Fig. 2 ist das Verfahren zum Erzeugen von nichtrostendem Stahl, insbesondere von chrom- oder chromnickelhaltigem Edelstahl, anhand von drei teilweise parallelen, teilweise hintereinander ablaufenden Schmelzen (Schmelze 1, Schmelze 2 und Schmelze 3) in dem Gefäß 1 und dem Gefäß 2 dargestellt. Die in Fig. 1 gezeigte Schmelzeinrichtung arbeitet momentan im Gefäß 1 mit den Elektroden 14 und im Gefäß 2 mit der Sauerstoff-Blaslanze 15 und /oder mit der Seitenlanze B.

Die 1. Schmelze startet im Schritt 1 mit dem Chargieren von Flüssig- und / oder Fest-einsätzen 1, danach werden im Schritt 2 die Lichtbogen-Elektroden 14 zur Lichtbogenschmelze 2 eingeschaltet. Erforderlichenfalls erfolgt zur Korrektur ein sanftes Bodenspülen mit Spülgas C-1 und das Roheisen kann (über eine Rinne) bei "A" chargiert werden. Im Beginn des Schrittes 3 wird der Elektrolichtbogen abgeschaltet und Sauerstoff O₂ eingeführt. Die Sauerstoff-Zuführung erfolgt zusätzlich über Tür-Blas-lanzen oder Seiten-Blaslanzen B.

Ergänzend kann ein starkes Bodenspülen mit Spülgas C-2 ausgeführt werden, das ausschließlich mit Bodenspülsteinen 20 und nicht mit Düsen für O₂ und inerten Gasen durchgeführt wird. Nach dem Abschalten des Sauerstoffs O₂ wird im Schritt 4 die Schlacken-Reduktion mit dem Lichtbogen 4 eingeleitet. Der Schritt 4 dauert ersichtlich (die Zeichnung gibt den Zeitablauf maßstabsgetreu wieder) etwa 1/4 der Zeit für das Sauerstoffaufblasen 3 im Gefäß 2.

Danach erfolgt im Schritt 5 das Abstechen 5 des flüssigen Stahls und unmittelbar danach z.B. eine Weiterverarbeitung in einer Gießpfanne für das Gießen in einer Stranggießmaschine. Die Reduktion des Chroms der Schlackenschicht 19 erfolgt dabei derart, dass zeitversetzt in dem Gefäß (2) während der Frischphase 3 einer ersten Schmelze im ersten Gefäß (1) die zweite Schmelze im zweiten Gefäß (2) mit dem Chargieren von Flüssig- und / oder Festeinsatz 1 begonnen wird. Dadurch wird das Einschmelzen im zweiten Gefäß (2) zusammen mit dem Beenden des Frischens durch Sauerstoffaufblasen 3 im ersten Gefäß (1) abgeschlossen. Während des Schrittes 3 wird im Gefäß (2) mit Sauerstoff O₂ geblasen und dadurch steht im Gefäß (1) genügend Zeit zur Verfügung, eine Schlackenreduktion mit Hilfe des Lichtbogens 4 auszuführen und danach mit dem Abstechen 5 das Verfahren für die erste Schmelze zu beenden.

Derselbe Vorgang spielt sich für die 2. Schmelze ab: Auch dort wird wiederum gegenüber einer 3. Schmelze im Gefäß (1) nach dem Abschalten des Sauerstoffs O₂ die Schlackenreduktion mit dem Lichtbogen 4 dann ausgeführt, wenn die 3. Schmelze im Schritt 3 das Sauerstoffaufblasen 3 (über eine Deckelblaslanze oder eine Top-Blaslanze) abarbeitet.

Dabei wird jeweils nach dem Schritt 3 durch das Sauerstoffaufblasen O₂ und Abschalten des Sauerstoffs, d.h. nach dem Frischen 3 durch Sauerstoffaufblasen der 1. Schmelze im ersten Gefäß (1) oder der 2. Schmelze im zweiten Gefäß (2) jeweils eine Reduktion 4 der chromhaltigen Schlackenschicht 19 durchgeführt über Reduktionsmittel sowie über zusätzliche Energie der Elektrolichtbogen.

Die Reduktion erfolgt innerhalb der Energiebilanz nach der Formel

**Cr**_{**2**}**O**_{**3**} **+ 2 Al ------ Al**_{**2**}**O**_{**3**} **+ 2 Cr + Energie**

**2 Cr**_{**2**}**O**_{**3**} **+ 3 Si ------ 3 SiO**_{**2**} **+ 4 Cr + Energie**

und erzeugt daher bei Verwendung von Ferrosilizium oder Sekundär-Aluminium eine zusätzliche Energiemenge, um die das Verfahren kälter gefahren werden kann. Bei einem umgekehrten Weg gegenüber der o.g. Gleichung müsste Energie zugeführt werden; diese Energie wird sonderbarerweise über den Stahl in die Schlackenreduktion in Form einer Überhitzung eingebracht. Aufgrund der beschriebenen Erfindung kann daher mit geringerer Überhitzung gefahren werden oder äquivalent an Energie gespart werden, die gemäß der o.g. Reduktionsgleichung erzeugt wird. Dadurch entsteht weniger Chromverschlackung als bisher. Die Ausnutzung des (teuren) Chroms ist besser und der Aufwand einer späteren Rückgewinnung, wie in der DE 196 21 143 A1 als zwingend notwendig beschrieben ist, kann vollständig entfallen.

Gemäß Fig. 3 ist eine Schlackenreduktion 4a mit Hilfsmaßnahmen aufgezeigt. Dabei wird nach dem Frischen durch Sauerstoffblasen 3 der 1. Schmelze im ersten Gefäß (1) oder der 2. Schmelze im zweiten Gefäß (2) jeweils eine Reduktion der chromhaltigen Schlacke durch starkes Bodenspülen mit starkem Spülgas C-2 über die Bodenspülsteine 20 durchgeführt. Dabei erfolgt die Zugabe der Reduktionsmittel, wie z.B. Ferrosilizium und / oder Aluminium.

Während des Lichtbogen-Einschmelzens im Schritt 2 ist im allgemeinen ein sanftes Bodenspülen mit inertem Spülgas C-1 vorteilhaft für ein schnelleres Einschmelzen.

Für die Spülarten C-1 und C-2, d.h. für das sanfte oder starke Bodenspülen wird als inertes Spülgas Stickstoff, Argon und Inertgasmischungen angewendet.

Ein starkes Bodenspülen mit Spülgas C-2 kann auch während des Frischens im Schritt 3 während des Sauerstoffaufblasens 3 stattfinden.

Während des Einschmelzens im Schritt 2 über das Lichtbogenschmelzen 2 werden feste Kühlstoffe und / oder Schlackenbildner D chargiert, um den Prozess zu unterstützen.

Dabei können als feste Kühlstoffe Schrott, Eisenschwamm, Masseln, Legierungsträger und als Schlackenbildner Kalk zugeführt werden.

In der Phase des Schrittes 1 kann das Roheisen über eine Rinne in das jeweilige Gefäß 1 und / oder 2 chargiert werden.

Zu ihrem Schutz werden die Elektroden 14 während des Abstechens des flüssigen Stahls im Schritt 5 in eine Parkstellung P im Elektrolichtbogen-Ofen gefahren.

Nach dem beschriebenen Prozess kann z.B. ein Chromgehalt der Schlacke von 20- 45 % auf kleiner 10% Chromgehalt reduziert werden.

Im Grunde gesehen, kann das aufgezeigte Verfahren auch nur in einem der Gefäße (1 oder 2) ausgeübt werden. Es muss dann nur der Nachteil in Kauf genommen werden, dass eine Versorgung einer kontinuierlich betriebenen Stranggießmaschine im Takt mit gefüllten Gießpfannen nicht möglich ist.

### Bezugszeichenliste

1 Gefäß (1)
2 Gefäß (2)
11 Hub- und Schwenkeinrichtung
12 Arm
13 Arm
14 Elektroden
15 Toplanze
16 Erkerofen
16a Ofendeckel
17 außermittiger Abstich
18 Schmelze
19 Schlackenschicht
20 Bodenspülstein
A Chargieren von Roheisen (über eine Rinne)
B Tür-Blaslanze, Seiten-Blaslanze
C-1 sanftes Bodenspülen mit Spülgas
C-2 starkes Bodenspülen mit Spülgas
D kontinuierliches Chargieren von Kühlstoffen und Schlackenbildnem
1 Chargieren von Flüssig- und / oder Festeinsätzen (Schritt 1) und Legierungsträgem
2 Lichtbogen-Einchmelzen (Schritt 2)
3 Sauerstoffaufblasen über Deckelblaslanze (Top-Btastanze) - (Schritt 3)
4 Schlackenreduktion mit Lichtbogen (Schritt 4)
4a Schlackenreduktion mit Hilfsmaßnahmen (Schritt 4)
5 Abstechen (Schritt 5)
P Parkstellung der Elektroden
O₂ 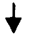 Sauerstoff einführen
O₂ 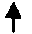 Sauerstoff abschalten
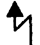 Elektrolichtbogen einschalten
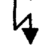 Elektrolichtbogen abschalten

## Patentansprüche

1. Verfahren zum Erzeugen von nichtrostendem Stahl, insbesondere von chrom- oder chromnickelhaltigem Edelstahl, in einer ein oder zwei oder mehr Gefäße (1: 2) umfassenden Schmelzeinrichtung, die jeweils entweder im Electrolichtbogen- oder im Sauerstoffaufblas-Verfahren betrieben werden, mit den Schritten
(a) Chargieren von eisenhaltigem Flüssig- und / oder Festeinsatz und Legierungsträgern,
(b) Erschmelzen des Einsatzes über Lichtbogen,
(c) Frischen der Schmelze (18) durch Sauerstoffblasen,
(d) Reduzieren der chromhaltigen Schlacke (4; 4a) durch Zuführen von Reduktionsmitteln sowie von Energie über den Elektrolichtbogen,
wobei der abgestochene flüssige Stahl unmittelbar einer Weiterverarbeitung zugeführt wird und
die Blasezeit (3) gleich oder kleiner ist als die Summe der Prozessschritte für Schlackenreduzieren (4), Abstechen (5), Chargieren (1) von Flüssig- und / oder Festeinsätzen mit Legierungsträgern und Lichtbogen-Schmelzen (2).

2. Verfahren nach Anspruch 1,
**dadurch gekennzeichnet,**
**dass** neben dem O₂ -Blasen mit einer Toplanze und / oder einer Seitenlanze (B) ausschließlich Inertgase und / oder Stickstoff durch Bodenspülsteine (20) eingeblasen werden.

3. Verfahren nach einem der Ansprüche 1 oder 2,
**dadurch gekennzeichnet,**
**dass** zeitversetzt in einem zweiten Gefäß (2) während der Frischphase (3) einer ersten Schmelze im ersten Gefäß (1) die zweite Schmelze im zweiten Gefäß (2) mit dem Chargieren von Flüssig- und / oder Festeinsatz begonnen und das Einschmelzen im zweiten Gefäß (2) zusammen mit dem Beenden des Frischens durch Sauerstoffblasen (3) im ersten Gefäß (1) abgeschlossen wird.

4. Verfahren nach Anspruch 3,
**dadurch gekennzeichnet,**
**dass** nach dem Frischen durch Sauerstoffblasen (3) der ersten Schmelze im ersten Gefäß (1) oder der zweiten Schmelze im zweiten Gefäß (2), jeweils eine Reduktion der chromhaltigen Schlacke durch Zuführen von Reduktionsmitteln sowie von Energie über den Elektrolichtbogen (4) vorgenommen wird.

5. Verfahren nach Anspruch einem der Ansprüche 3 oder 4,
**dadurch gekennzeichnet,**
**dass** nach dem Frischen durch Sauerstoffblasen (3) der ersten Schmelze im ersten Gefäß (1) oder der zweiten Schmelze im zweiten Gefäß (2) jeweils eine Reduktion der chromhaltigen Schlacke durch Zuführen von Reduktionsmitteln sowie durch starkes Bodenspülen mit inertem Spülgas (C-2) durchgeführt wird.

6. Verfahren nach einem der Ansprüche 1 bis 5,
**dadurch gekennzeichnet,**
**dass** während des Lichtbogen-Einschmelzens (2) ein sanftes Bodenspülen mit Stickstoff und / oder mit inertem Spülgas (C-1) über Bodenspülsteine (20) durchgeführt wird.

7. Verfahren nach einem der Ansprüche 2, 5 oder 6,
**dadurch gekennzeichnet,**
**dass** für das sanfte oder starke Bodenspülen (C-1; C-2) über Bodenspülsteine (20) als inertes Spülgas Stickstoff, Argon oder Inertgasmischungen angewendet werden.

8. Verfahren nach einem der Ansprüche 1 bis 7,
**dadurch gekennzeichnet,**
**dass** während des Frischens durch Sauerstoffaufblasen (3) mit Toplanzen (15) und / oder Seitenlanzen (B) gleichzeitig ein starkes Bodenspülen mit Spülgas (C-2) über die Bodenspülsteine (20) durchgeführt wird.

9. Verfahren nach einem der Ansprüche 1 bis 8,
**dadurch gekennzeichnet,**
**dass** während des Einschmelzens über Elektrolichtbogen (2) feste Kühlstoffe und / oder Schlackenbildner (D) kontinuierlich chargiert werden.

10. Verfahren nach Anspruch 9,
**dadurch gekennzeichnet,**
**dass** als feste Kühlstoffe Schrott, Eisenschwamm, Masseln, Legierungsträger und als Schlackenbildner Kalk zugeführt werden.

11. Verfahren nach einem der Ansprüche 1 bis 10,
**dadurch gekennzeichnet,**
**dass** Roheisen über eine Rinne und / oder den geöffneten Ofendeckel (16a) in das jeweilige Gefäß (1; 2) chargiert wird.

12. Verfahren nach einem der Ansprüche 1 bis 11,
**dadurch gekennzeichnet,**
**dass** während des Abstechens des flüssigen Stahls die Elektroden (14) des Elektrolichtbogen-Ofens in eine Parkstellung (P) gefahren werden.

## Claims

1. Method of producing stainless steel, particularly from high-grade steel containing chromium or chromium-nickel, in melting equipment which comprises one or two or more vessels (1; 2) and which is respectively operated either in an electric arc process or a basic oxygen process, comprising the steps
(a) charging of liquid and/or solid charge, which contains iron, and alloying carriers,
(b) melting the charge by way of an arc,
(c) oxidising the melt (18) by oxygen converting,
(d) reducing the slag (4; 4a), which contains chromium, by feeding reduction agents as well as energy by way of the electric arc,
wherein the tapped liquid steel is fed directly to further processing and the converting time (3) is the same as or smaller than the sum of the process steps for slag reduction (4), tapping (5), charging (1) of liquid and/or solid charges together with alloying carriers and arc melting (2).

2. Method according to claim 1, **characterised in that** apart from the oxygen converting by a top lance and/or a side lance (B) exclusively inert gases and/or nitrogen are injected by base flushing blocks (20).

3. Method according to one of claims 1 and 2, **characterised in that** the second melt in a second vessel (2) is commenced by the charging of liquid and/or solid charge into the second vessel (2) displaced in time during the oxidising phase (3) of a first melt in the first vessel (1) and the melting in the second vessel (2) is concluded together with conclusion of the oxidisation by oxygen converting (3) in the first vessel (1).

4. Method according to claim 3, **characterised in that** after the oxidisation by oxygen converting (3) of the first melt in the first vessel (1) or the second melt in the second vessel (2) a reduction of the slag, which contains chromium, is undertaken each time by feeding reduction agents as well as energy by way of the electric arc (4).

5. Method according to one of claims 3 and 4, **characterised in that** after oxidisation by oxygen converting (3) of the first melt in the first vessel (1) or the second melt in the second vessel (2) a reduction of the slag, which contains chromium, is carried out each time by feeding reduction agents as well as by strong base flushing with inert gas (C-2).

6. Method according to one of claims 1 to 5, **characterised in that** during the arc melting (2) a mild base flushing with nitrogen and/or with inert flushing gas (C-1) is carried out by way of base flushing blocks (20).

7. Method according to one of claims 2, 5 and 6, **characterised in that** nitrogen, argon or inert gas mixtures is or are used as inert flushing gas for the mild or strong base flushing (C-1; C-2) by way of base flushing blocks (20).

8. Method according to one of claims 1 to 7, **characterised in that** during the oxidisation by oxygen converting (3) with top lances (15) and/or side lances (B) a strong base flushing with flushing gas (C-2) is carried out at the same time by way of the base flushing blocks (20).

9. Method according to one of claims 1 to 8, **characterised in that** during melting by way of electric arc (2) solid cooling substances and/or slag formers (D) are continuously charged.

10. Method according to claim 9, **characterised in that** scrap, metallised iron ore, pigs, alloying carriers and lime, as slag former, are added as solid cooling substances.

11. Method according to one of claims 1 to 10, **characterised in that** raw iron is charged into the respective vessel (1; 2) by way of a channel and/or the opened furnace lid (16a).

12. Method according to one of claims 1 to 11, **characterised in that** during tapping of the liquid steel the electrodes (14) of the electric arc oven are moved into a park setting (P).

## Revendications

1. Procédé de fabrication d'acier inoxydable, notamment d'acier inoxydable contenant du chrome ou du nickel-chrome, dans un dispositif de coulée comprenant deux cuves ou plus (1 :2), qui fonctionnent respectivement suivant un procédé soit à arc électrique, soit à soufflage d'oxygène, comprenant les étapes suivantes :
(a) chargement d'une charge solide et/ou liquide contenant du fer et de bases d'alliages,
(b) fonte de la charge par arc électrique,
(c) rafraîchissement de la coulée (18) par soufflage d'oxygène,
(d) réduction de la scorie contenant du chrome (4 ; 4a) par apport de réducteurs ainsi que d'énergie par l'arc électrique,
l'acier liquide coulé étant acheminé directement vers un traitement ultérieur et
le temps de soufflage (3) étant inférieur ou égal à la somme des étapes opératoires pour la réduction de la scorie (4), la coulée (5), le chargement (1) de charges liquides et/ou solides avec des bases d'alliages et la coulée par arc électrique (2).

2. Procédé selon la revendication 1,
**caractérisé en ce que**
outre le soufflage d'O₂ à l'aide d'une lance supérieure et/ou d'une lance latérale (B), on injecte exclusivement des gaz inertes et/ou de l'azote par des bouchons poreux (20)

3. Procédé selon l'une quelconque des revendications 1 ou 2,
**caractérisé en ce que**,
avec un décalage dans le temps, dans une deuxième cuve (2), pendant la phase de rafraîchissement (3) d'une première coulée dans la première cuve (1), on commence la deuxième coulée dans la deuxième cuve (2) en chargeant de la charge liquide et/ou solide et on termine la coulée dans la deuxième cuve (2) en même temps que se termine le rafraîchissement par soufflage d'oxygène (3) dans la première cuve (1).

4. Procédé selon la revendication 3,
**caractérisé en ce que**,
après le rafraîchissement par soufflage d'oxygène (3) de la première coulée dans la première cuve (1) ou de la deuxième coulée dans la deuxième cuve (2), on procède respectivement à une réduction de la scorie contenant du chrome en apportant des réducteurs ainsi que de l'énergie par l'arc électrique (4).

5. Procédé selon l'une quelconque des revendications 3 ou 4,
**caractérisé en ce que**,
après le rafraîchissement par soufflage d'oxygène (3) de la première coulée dans la première cuve (1) ou de la deuxième coulée dans la deuxième cuve (2), on procède respectivement à une réduction de la scorie contenant du chrome en apportant des réducteurs ainsi qu'en balayant vigoureusement le fond avec du gaz de balayage inerte (C-2).

6. Procédé selon l'une quelconque des revendications 1 à 5,
**caractérisé en ce que**,
pendant la coulée sous arc électrique (2), on procède à un balayage modéré du fond avec de l'azote et/ou avec du gaz de balayage inerte (C-1) par le biais de bouchons poreux (20).

7. Procédé selon l'une quelconque des revendications 2, 5 ou 6,
**caractérisé en ce que**,
pour le balayage modéré ou vigoureux du fond (C-1 ; C-2) par le biais de bouchons poreux (20), on utilise comme gaz de balayage inerte de l'azote, de l'argon ou des mélanges de gaz inertes.

8. Procédé selon l'une quelconque des revendications 1 à 7,
**caractérisé en ce que**,
pendant le rafraîchissement par soufflage d'oxygène (3) à l'aide de lances supérieures (15) et/ou de lances latérales (8), on procède en même temps à un vigoureux balayage du fond avec du gaz de balayage (C-2) par le biais des bouchons poreux (20).

9. Procédé selon l'une quelconque des revendications 1 à 8,
**caractérisé en ce que**,
pendant la coulée par arc électrique (2), on charge en continu des refroidisseurs et/ou des fondants (D).

10. Procédé selon la revendication 9,
**caractérisé en ce que**
on apporte comme refroidisseurs solides de la ferraille, du fer spongieux, des lingots, des bases d'alliages et de la chaux comme fondant.

11. Procédé selon l'une quelconque des revendications 1 à 10,
**caractérisé en ce que**,
le fer brut est chargé par un conduit et/ou par le couvercle ouvert du four (16a) dans la cuve respective (1 ; 2).

12. Procédé selon l'une quelconque des revendications 1 à 11,
**caractérisé en ce que**,
pendant la coulée de l'acier liquide, les électrodes (14) du four à arc électrique sont mises en position de stationnement (P).
